# EUROPÄISCHE PATENTANMELDUNG

(11) **EP 1 627 848 A2**
(43) Veröffentlichungstag der Anmeldung: **22.02.2006**
(21) Anmeldenummer: 05017997.7
(22) Anmeldetag: 18.08.2005
(51) Int. Cl.: B66F 9/20, B62D 1/04

(54) **Flurförderzeug mit ergonomisch angeordneten Bedienelementen**

(30) Priorität: 20.08.2004 DE 102004040457
(71) Anmelder: Jungheinrich Aktiengesellschaft, 22047 Hamburg (DE)
(72) Erfinder: Haack, Wolfgang, 21033 Hamburg (DE); Niebuhr, Michael, 22941 Bargteheide (DE); Schöttke, Carsten, Dipl.-Ing., 85368 Moosburg (DE)
(74) Vertreter: Tiesmeyer, Johannes

(57) **Zusammenfassung**

Ein Flurförderzeug mit einem um eine Lenkrad-Drehachse (18) drehbaren Lenkrad (14), wobei die Lenkrad-Drehachse (18) bezüglich einer zu einer Aufstandsfläche des Flurförderzeugs orthogonalen, einen Fahrerplatz (12) durchsetzenden und in Längsrichtung des Flurförderzeugs verlaufenden gedachten Ebene (LME) um eine zur Aufstandsfläche im Wesentlichen orthogonale in der gedachten Ebene liegenden Verdrehungsachse (20) einen vorbestimmten Verdrehwinkel (α) verdreht ist, ist dadurch gekennzeichnet, dass die Lenkrad-Drehachse (18) vom Fahrer weg verdreht ist, wobei die Verdrehungsachse (20) vom Fahrerplatz (12) aus betrachtet in Vorwärtsfahrtrichtung (VF) des Flurförderzeugs gelegen ist. Ferner wird ein Flurförderzeug mit einem Griffteil (28) offenbart, an welchem ein erster Schalter (32) und ein zweiter Schalter (34) vorgesehen sind, die wenn ein Griffabschnitt (28c) mit einer Hand umgriffen ist, von einen ersten bzw. zweiten Finger erreichbar und betätigbar sind.

## Beschreibung

Die vorliegende Anmeldung betrifft ein Flurförderzeug mit ergonomisch angeordneten Bedienelementen. Als Bedienelemente kommen insbesondere ein Lenkrad und Schalter in Betracht.

Dementsprechend betrifft die vorliegende Erfindung nach einem ersten Gesichtspunkt ein Flurförderzeug mit einem um eine Lenkrad-Drehachse drehbaren Lenkrad, wobei die Lenkrad-Drehachse bezüglich einer zu einer Aufstandsfläche des Flurförderzeugs orthogonalen, einen Fahrerplatz durchsetzenden und in Längsrichtung des Flurförderzeugs verlaufenden gedachten Ebene um eine zur Aufstandsfläche im Wesentlichen orthogonale in der gedachten Ebene liegende Verdrehungsachse einen vorbestimmten Verdrehwinkel verdreht ist.

Derartige Flurförderzeuge sind allgemein bekannt. Beispielsweise ist ein Flurförderzeug bekannt, bei welchem Bedienelemente, wie unter anderem das oben bezeichnete Lenkrad, an einem vom Fahrerplatz aus betrachtet konvex gekrümmten Bedienpult zum Fahrer hin geneigt angeordnet ist.

Nachteilig an dieser Anordnung des Lenkrads ist, dass der Fahrer des Flurförderzeugs, obwohl die Drehachse des Lenkrads zu ihm hinweist, eine Handhaltung zur Drehung des Lenkrads einnehmen muss, welche ein schnelles Drehen des Lenkrads nicht ausreichend unterstützt oder welche nach einiger Zeit zu Ermüdungserscheinungen führen kann.

Eine erste Aufgabe der vorliegenden Erfindung ist es daher, ein Flurförderzeug der eingangs genannten Art bereitzustellen, bei welchem das Lenkrad ergonomischer angeordnet ist als im Stand der Technik, so dass eine schnelle Lenkraddrehung und eine ermüdungsärmere Betätigung des Lenkrads auch über lange Zeit möglich ist.

Diese Aufgabe wird gemäß einem ersten Gesichtspunkt der vorliegenden Erfindung durch ein gattungsgemäßes Flurförderzeug gelöst, bei welchem die Lenkrad-Drehachse vom Fahrer weg verdreht ist, wobei die Verdrehungsachse vom Fahrerplatz aus betrachtet in Vorwärtsfahrtrichtung des Flurförderzeugs gelegen ist.

Im Gegensatz zum Stand der Technik ist bei dem Flurförderzeug der vorliegenden Erfindung die Drehachse des Lenkrads vom Fahrer weg verschwenkt, d. h. sie verläuft an dem am Fahrerplatz des Flurförderzeugs sich befindenden Fahrer vorbei.

Mit "Fahrerplatz" ist dabei ein Raumvolumen bezeichnet, welches von einem Fahrer während eines Fahrbetriebs des Flurförderzeugs eingenommen wird. Dieses vom Fahrer eingenommene Raumvolumen lässt sich anhand der Anordnung der Bedienungselemente und des Sichtfelds, welches das Flurförderzeug bietet, ermitteln.

Liegt die Verdrehungsachse, um welche die Drehachse des Lenkrads verdreht ist in Vorwärtsfahrtrichtung des Flurförderzeugs vor dem Fahrerplatz ― die Vorwärtsfahrtrichtung ist dabei auch die Richtung, in welche der Flurförderzeugfahrer bei Vorwärtsfahrt blickt -, so weist eine zur Lenkrad-Drehachse orthogonale Lenkradebene nicht wie im Stand der Technik zum Fahrer hin, sondern zu einer Außenseite des Flurförderzeugs, genauer weist die Lenkradebene zum einen in Rückwärtsfahrtrichtung und weist zum anderen in Flurförderzeugseitenrichtung vom Fahrerplatz weg.

Da das Lenkrad in der Regel nicht wie bei einem Kraftfahrzeug durch einen von Händen umgreifbaren Ring gebildet ist, sondern eine im Wesentlichen ebene Scheibe mit einem in der Regel orthogonal zur Scheibenebene abstehenden Griff aufweist, kann dieser in der Regel zur Drehachse des Lenkrads parallel verlaufende Griff in einer natürlichen Handhaltung des Fahrers gegriffen und das Lenkrad somit ergonomisch bedient werden.

Der Lenkradgriff kann zur Erleichterung der Lenkraddrehung relativ zur Lenkradscheibe drehbar sein, vorzugsweise um eine zur Drehachse des Lenkrads parallele Griffdrehachse.

Da der Fahrerplatz der Referenzort zur Anordnung von Bedienelementen Flurförderzeug ist, ist einem allgemeinen Erfindungsgedanken folgend eine den Fahrerplatz durchsetzende, zur Aufstandsfläche des Flurförderzeugs orthonale und in Längsrichtung des Flurförderzeugs verlaufende gedachte Ebene eine Bezugsebene zur Beschreibung der Anordnung des Lenkrads. Das Flurförderzeug ist dabei jedoch besonders einfach steuerbar, wenn sich der Fahrerplatz in der Quermitte des Flurförderzeugs befindet, da dann der rechte und der linke Seitenrand des Flurförderzeugs gleich weit vom Flurförderzeugfahrer entfernt sind und der Flurförderzeugfahrer so das Fahrzeug durch enge Durchgänge leichter hindurchsteuern kann als bei außermittiger Anordnung des Fahrerplatzes. Aus diesem Grunde ist die gedachte Ebene vorzugsweise eine Längsmittelebene des Flurförderzeugs. Mit Längsmittelebene ist dabei eine in Flurförderzeug-Längsrichtung verlaufende, zur Aufstandsfläche des Flurförderzeugs im Wesentlichen orthogonale Mittelebene, d. h. in der Flurförderzeug-Quermitte liegende Ebene, bezeichnet.

Wenn zuvor gesagt wurde, dass die Lenkrad-Drehachse um eine zur Aufstandsfläche im Wesentlichen orthogonale Verdrehungsachse verdreht ist, so soll dies nicht ausschließen, dass die Lenkrad-Drehachse zusätzlich um eine zur bezeichneten Verdrehungsachse orthogonale weitere Verdrehungsachse verdreht ist. Es soll lediglich sichergestellt sein, dass die Lenkrad-Drehachse um die oben bezeichnete Verdrehungsachse verdreht ist.

Tatsächlich hat sich gezeigt, dass das Lenkrad besonders bedienerfreundlich zu betätigen ist, wenn die Lenkradebene orthogonal zur Aufstandsfläche des Flurförderzeugs angeordnet ist, d. h. wenn die Lenkrad-Drehachse im Wesentlichen parallel zur Aufstandsfläche orientiert ist.

Je nach Typ einer Bedienperson weist bei locker mit leicht abgewinkelten Armen gehaltener offener Hand eine zwischen Daumen und den übrigen vier Fingern der Hand hindurch gehende gedachte Linie mit unterschiedlichem Neigungswinkel zu einer Körperlängsmittelebene der betreffenden Bedienperson hin. Je nach Handhaltung schneidet die so gedachte Linie in unterschiedlicher Entfernung, jedoch stets vor der Bedienperson liegend deren Körper-Längsmittelebene. Hier hat sich gezeigt, dass eine ergonomisch günstige Anordnung der Lenkrad-Drehachse nahe der oben beschriebenen gedachten Linie in einem Verdrehwinkelbereich von 5 bis 15° relativ zur gedachten Bezugsebene liegt. Besonders bevorzugt ist die Lenkrad-Drehachse bezogen auf die gedachte Ebene etwa 10° verdreht. Es kommt dabei lediglich auf die Beträge der Winkel an, da das Lenkrad, vom Fahrerplatz aus betrachtet, zur Bedienung mit der linken Hand eines Fahrers links von der gedachten Ebene angeordnet sein kann, oder zur Bedienung mit der rechten Hand des Fahrers rechts von der gedachten Ebene angeordnet sein kann.

Das Lenkrad ist vorzugsweise nicht mechanisch mit lenkbaren Rädern verbunden, sondern lediglich elektronisch. Lenkbefehle durch Drehung des Lenkrads werden so von einem Drehungssensor erfasst, an eine Steuereinheit weitergeleitet und dort in Befehlssignale für entsprechende Lenkaktuatoren umgerechnet. Dadurch kann das Lenkrad im Durchmesser sehr klein gehalten sein.

Gemäß einem weiteren vom obigen unabhängigen Gesichtspunkt der vorliegenden Erfindung betrifft diese ein Flurförderzeug mit einem Griffteil, an welchem ein erster Schalter zur Steuerung einer steuerbaren ersten Komponente des Flurförderzeugs derart vorgesehen ist, dass er dann, wenn ein Griffabschnitt des Griffteils mit einer Hand umgriffen ist, von einem ersten Finger der das Griffteil greifenden Hand erreichbar und betätigbar ist.

Es sei jedoch ausdrücklich darauf hingewiesen, dass dieser weitere Gesichtspunkt nicht nur alternativ, sondern auch zusätzlich zu dem ergonomisch angeordneten Lenkrad an einem Flurförderzeug verwirklicht sein kann und vorzugsweise verwirklicht ist.

Flurförderzeuge der Firma Jungheinrich mit den genannten Griffteilen sind seit langer Zeit bekannt und erfolgreich im Einsatz.

Aufgabe der vorliegenden Erfindung ist es, die bekannten Flurförderzeuge in ihrer Bedienbarkeit noch weiter zu verbessern und so den Bedienungskomfort zu erhöhen.

Dabei ist zu berücksichtigen, dass der erste Schalter häufig den Antrieb des Flurförderzeugs steuert, so dass je nach Schalterstellung das Flurförderzeug zur Vorwärts- oder Rückwärtsfahrt angewiesen werden kann, wobei überdies durch den Auslenkungsbetrag des ersten Schalters von einer Ruhestellung die Geschwindigkeit des Flurförderzeugs steuerbar sein kann. Dabei ist es von Vorteil, wenn der Flurförderzeugfahrer diesen Schalter bedienen kann, während er den Griffabschnitt des Griffteils mit einer Hand umgreift, so dass er während des Verfahrens des Flurförderzeugs einen sicheren Halt an diesem hat.

Die zuvor genannte Aufgabe wird bei einem gattungsgemäßen Flurförderzeug dadurch gelöst, dass ein vom ersten gesonderter zweiter Schalter am Flurförderzeug zur Steuerung einer steuerbaren von der ersten verschiedenen zweiten Komponente des Flurförderzeugs derart vorgesehen ist, dass er dann, wenn der Griffabschnitt des Griffteils mit der Hand umgriffen ist, von einem vom ersten Finger verschiedenen zweiten Finger der das Griffteil greifenden Hand erreichbar und betätigbar ist.

Durch die oben genannte Anordnung des zweiten Schalters kann eine weitere Komponente des Flurförderzeugs ebenfalls gesteuert werden, ohne dass der Fahrer den Griffabschnitt loslassen oder an diesem mit der Hand gleiten muss. Er hat daher dauerhaft sicheren Halt am Flurförderzeug, wobei gleichzeitig dafür gesorgt ist, dass sowohl der erste als auch der zweite Schalter mit je nur einem Finger der das Griffteil greifenden Hand betätigbar ist.

Dabei werden als Maße Körpermaße einer durchschnittlich gewachsenen, erwachsenen, vorzugsweise männlichen Person zugrunde gelegt.

Die erste Komponente des Flurförderzeugs kann dabei der Flurförderzeugantrieb und die zweite Komponente kann der Hubantrieb für ein Lastverlagerungsmittel des Flurförderzeugs sein, so dass der Flurförderzeugfahrer, ohne den Griffabschnitt des Griffteils loszulassen, oder seinen festen Griff zu lockern, eine Last anfahren, die angefahrene Last mit einem Lastverlagerungsmitel aufnehmen, nach der Aufnahme anheben, zu einem gewünschten Kommissionierort transportieren, dort in einer gewünschten Höhe abstellen und einen weiteren Arbeitsgang beginnen kann.

Mit "Schalter" im Sinne der vorliegenden Anmeldung sind allgemein Bedienelemente bezeichnet, welche bei Änderung ihrer Orientierung ein der Änderung oder/und der neuen Orientierung entsprechendes Signal ausgeben können. Dies soll auch einen einfachen lediglich zwischen zwei Schaltstellungen schaltbaren Schalter einschließen.

Um sicherzustellen, dass sowohl der erste als auch der zweite Schalter mit jeweils nur einem Finger betätigbar sind, können der erste und der zweite Schalter Drehschalter sein, welche durch Drehung um jeweilige Drehschalterachsen betätigbar sind. Drehschalter haben nämlich den Vorteil, dass sie mit einer bezogen auf die jeweilige Drehschalterachse beliebigen geeigneten radialen Länge ausgebildet sein können, so dass aufgrund der Hebelwirkung eine geringe mit nur einem Finger aufbringbare Kraft zur Betätigung des Schalters ausreicht. Außerdem kann durch die wählbare radiale Länge ein Drehschalter mit größerer Freiheit bezüglich des Anbringungsortes angeordnet werden als ein grundsätzlich ebenfalls möglicher Drucktastenschalter.

Ergonomisch besonders günstig kann der erste Drehschalter in an sich bekannter Weise derart ausgebildet sein, dass der Griffabschnitt zumindest abschnittsweise zu einer Griffabschnitt-Verlaufsrichtung, insbesondere Griffabschnitt-Mittelachse etwa symmetrisch ist, wobei die Drehschalterachse des ersten Drehschalters im Wesentlichen parallel, vorzugsweise sogar im Wesentlichen koaxial zur Griffabschnitt-Verlaufsrichtung, insbesondere zur Griffabschnitt-Mittelachse verläuft. In diesem Falle kann der erste Drehschalter sehr einfach mit dem Daumen der den Griffabschnitt greifenden Hand betätigt werden. Vorzugsweise ist hierzu der erste Drehschalter an einem axialen Längsende des Griffteils bzw. des Griffabschnitts vorgesehen.

Der zweite Drehschalter ist dabei vorteilhaft derart angeordnet, dass er mit dem Zeigefinger der den Griffabschnitt greifenden Hand erreichbar und betätigbar ist. Dies hat zum einen den Vorteil, dass Daumen und Zeigefinger in der Regel die beweglichsten Finger einer Hand sind und ohne Übung gewohnheitsmäßig sehr leicht gezielt bewegt werden können. Die Betätigung des ersten und des zweiten Schalters mit Daumen bzw. Zeigefinger hat jedoch darüber hinaus die vorteilhafte Wirkung, dass drei benachbarte Finger der den Griffabschnitt greifenden Hand, nämlich der Mittelfinger, der Ringfinger und der kleine Finger, eine zusammenhängende den Griffabschnitt umgreifende Handfläche bilden, so dass auch bei Betätigung des ersten und des zweiten Drehschalters stets ausreichend Haltekraft verfügbar ist.

Ergonomische Untersuchungen haben ergeben, dass der zweite Drehschalter dann besonders einfach von nur einem Finger, insbesondere vom Zeigefinger, der den Griffabschnitt greifenden Hand betätigbar ist, wenn die Drehschalterachse des zweiten Drehschalters bezüglich der Drehschalterachse des ersten Drehschalters um eine zur Aufstandsfläche des Flurförderzeugs im Wesentlichen orthogonale Kippachse einen Winkel von -5° bis +10°, vorzugsweise 0° bis +7,5°, besonders bevorzugt ca. 5° verkippt ist, wobei die Drehschalterachse des ersten Drehschalters als Bezugsachse dient, von welcher aus positive Winkel im Gegenuhrzeigersinn gemessen werden.

Neben der relativen Orientierung der Drehschalterachse des zweiten Drehschalters zu jener des ersten Drehschalters spielt auch die absolute Anordnung der Drehschalterachse des zweiten Drehschalters für eine ergonomische Betätigbarkeit eine große Rolle. Dabei hat sich gezeigt, dass eine geringe Betätigungskraft zur Betätigung des zweiten Drehschalters erforderlich ist, wenn die Drehschalterachse des zweiten Drehschalters mit einer Bezugsebene, welche sowohl zur Längsrichtung des Flurförderzeugs als auch zu dessen Aufstandsfläche orthogonal ist und welche den Schnittpunkt der Drehschalterachse des zweiten Drehschalters mit der Längsmittelebene des Flurförderzeugs enthält, einen Winkel von ca. 15° bis 30°, vorzugsweise von 20° bis 25°, besonders bevorzugt von ca. 23°, einschließt, wobei positive Winkel von der Bezugsebene aus im Uhrzeigersinn gemessen sein sollen.

Da das Griffteil in der Regel zwischen der Gürtellinie und dem Brustbereich einer durchschnittlich großen erwachsenen Bedienperson angeordnet ist, ist der zweite Schalter, unhabhängig davon, ob es sich um einen Drehschalter, einen Tastschalter oder dergleichen handelt, dann in sehr kurzer Zeit erreichbar und mit geringer Kraft durch einen Finger betätigbar, wenn der zweite Schalter bezogen auf die Aufstandsfläche des Flurförderzeugs niedriger angeordnet ist als der erste Schalter.

Da weiterhin bei umgriffenem Griffabschnitt der Daumen des Flurförderzeugfahrers näher an dessen Körper gelegen ist als dessen Zeigefinger, ist es für eine kraftsparenden Betätigung des ersten und des zweiten Schalters vorteilhaft, wenn der erste Schalter, vom Fahrerplatz des Flurförderzeugs aus betrachtet, in Längsrichtung des Flurförderzeugs vor dem zweiten Schalter angeordnet ist.

Bevorzugt ist das Flurförderzeug mit einem Bedienpult versehen, welches ein Lenkrad mit wenigstens einem der oben genannten Merkmale oder/und welches einen ersten und einen zweiten Schalter mit wenigstens einem der oben genannten Merkmale umfasst. Vorzugsweise umfasst das Bedienpult sowohl ein Lenkrad als auch einen ersten und einen zweiten Schalter, so dass das Bedienpult als vormontierte oder vormontierbare Baugruppe an das Flurförderzeug anbringbar oder an diesem austauschbar ist.

Die vorliegende Erfindung wird im Folgenden anhand einer bevorzugten Ausführungsform der vorliegenden Erfindung näher beschrieben werden. Es stellt dar:
- Fig. 1: eine Draufsicht eines Bedienpults eines erfindungsgemäßen Flurförderzeugs, und
- Fig. 2: eine perspektivische Ansicht eines Ausschnitts des Bedienpults mit Griffteil, erstem und zweitem Schalter.

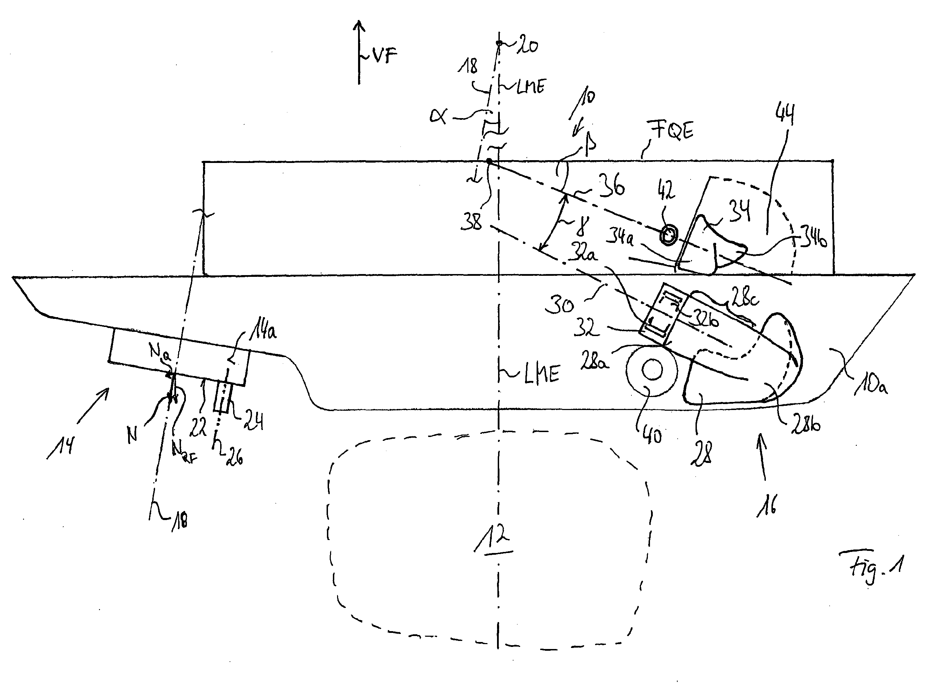

In Fig. 1 ist ein Bedienpult eines nicht weiter dargestellten Flurförderzeugs schematisch in Draufsicht allgemein mit 10 bezeichnet.

Fachleute werden verstehen, dass das Bedienpult 10 mehr als die dargestellten Bedienelemente umfasst. Aus Gründen der Einfachheit und Übersichtlichkeit sind nur die für die vorliegende Erfindung wesentlichen Bauteile dargestellt.

Die Zeichenebene der Fig. 1 ist parallel zur Aufstandsfläche des Flurförderzeugs, welches das Bedienpult 10 trägt. Darüber hinaus ist die Vorwärtsfahrtrichtung des erfindungsgemäßen Flurförderzeugs mit dem Pfeil VF bezeichnet.

In Vorwärtsfahrtrichtung VF hinter dem Bedienpult 10 ist strichliniert ein Fahrerplatz 12 angedeutet. An dieser Stelle befindet sich während des Verfahrbetriebs des Flurförderzeugs ein Fahrer, so dass er mit seiner linken Hand das Lenkrad 14 und mit seiner rechten Hand die Schalteranordnung 16 bedienen kann.

Eine in Längsrichtung des Flurförderzeugs verlaufende, zur Aufstandsfläche des Flurförderzeugs und zur Zeichenebene der Fig. 1 orthogonale durch die Quermitte des Flurförderzeugs hindurch gehende Längsmittelebene ist in Fig. 1 mit LME bezeichnet. Diese Längsmittelebene durchsetzt den Fahrerplatz 12 im Wesentlichen symmetrisch, so dass das Flurförderzeug zur rechten und zur linken Seite vom Fahrer aus im Wesentlichen die gleiche Ausdehnung besitzt. Dies erleichtert die Manövrierbarkeit des Flurförderzeugs.

Das Lenkrad 14 dreht um eine zur Abstandsfläche des Flurförderzeugs im Wesentlichen parallele Lenkrad-Drehachse 18. Diese Lenkraddrehachse ist um eine zur Aufstandsfläche des Flurförderzeugs und zur Zeichenebene der Fig. 1 im Wesentlichen orthogonale Verdrehungsachse 20 einen vorbestimmten Winkel α verdreht. Im dargestellten Beispiel beträgt der Winkel α ca. 10°. Die Verdrehungsachse 20 liegt vollständig in der Längsmittelebene, welche im dargestellten Beispiel die Bezugsebene zur Ermittlung einer Verdrehung der Lenkrad-Drehachse 18 ist.

Da die Lenkrad-Drehachse 18 die Längsmittelebene in verhältnismäßig großer Entfernung vor dem Bedienpult 10 schneidet, ist die Darstellung der Längsmittelebene in Fig. 1 nicht maßstabsgerecht verkürzt dargestellt.

Das Lenkrad 14, genauer ein Normalenvektor N normal zu einer zur Drehachse 18 orthogonalen Lenkradebene 22 weist in Rückwärtsfahrtrichtung (Komponente N_{RF}) und weist weiterhin in Querrichtung (Komponente N_{Q}) des Flurförderzeugs vom Fahrerplatz 12 weg.

Dies hat den Vorteil, dass ein Fahrer, welcher den Fahrplatz 12 einnimmt und mit leicht angewinkelten Armen den Griffzapfen 24 des Lenkrads 14 mit der linken Hand greift, dies in einer natürlichen Handhaltung tun kann, so dass er bei der Betätigung des Lenkrads 14 weniger schnell ermüdet und ggf. das Lenkrad 14 schneller als im Stand der Technik betätigen kann. Der Griffzapfen 24 steht parallel zur Lenkrad-Drehachse 18 von der zur Drehachse 18 orthogonalen Lenkradebene 22 zur Fahrerplatzseite hin vor und ist um eine zur Lenkrad-Drehachse 18 parallele Griffzapfendrehachse 26 bezüglich des Lenkrads 14 drehbar. Dadurch kann verhindert werden, dass eine Mantelfläche des Griffzapfens 24 bei Drehung des Lenkrads 14 relativ zur Haut gleitet und sich der Fahrer unter Umständen verletzt.

Weiterhin ist die Mantelfläche 14a des Lenkrads 14 geriffelt oder sonstwie reibungserhöhend ausgebildet, so dass ein Fahrer, falls er dies wünscht, das Lenkrad auch an dessen Mantelfläche greifen und verdrehen kann.

Bei der in Fig. 1 gezeigten Ausführungsform ist am Bedienpult 10 ein Griffteil 28 vorgesehen, welches hornartig von einer Bedienpultfläche 10a nach oben absteht, wobei das Griffteil 28 derart gekrümmt ist, dass das freie Längsende 28a des Griffteils 28 nach vorne und zur Flurförderzeug-Längsmittelebene LME hin weist.

Strichliniert ist der bei Draufsicht vom Griffteil 28 verdeckte Rand der Aufsatzfläche 28b des Griffteils 28 auf der Bedienpultfläche 10a dargestellt.

Das Griffteil 28 weist in seinem dem freien Längsende 28a nahen Bereich einen Griffabschnitt 28c auf, welcher während des Betriebs des Flurförderzeugs von der rechten Hand des Fahrers gegriffen werden kann. Das Greifen des Griffabschnitts 28c erfolgt dabei derart, dass die vier Finger vom Zeigefinger bis zum kleinen Finger der rechten Hand den Griffabschnitt 28c an dessen vom Fahrer abgewandten Seite umgreifen, während der Daumen der rechten Hand den Griffabschnitt 28c an dessen dem Fahrer zugewandten Seite umgreift.

An dem freien Längsende 28a des Griffteils 28 ist weiter ein um eine erste Schalterdrehachse 30 drehbarer erster Schalter 32 angeordnet. Dieser Schalter 32 weist zwei in Umfangsrichtung des Schalters 32 voneinander beabstandete Vorsprünge 32a und 32b auf, zwischen welchen der Daumen der rechten Hand eingelegt werden kann, so dass der Schalter 32 durch Formschlusseingriff mit dem Daumen sowohl im Uhrzeigersinn als auch im Gegenuhrzeigersinn um die erste Schalterdrehachse 30 verdreht werden kann. Die Schalterdrehachse 30 fällt mit einer Mittelachse des Griffabschnitts 28c im Wesentlichen zusammen.

Der Schalter 32 kann dabei derart mit einer Steuerung des Flurförderzeugs verbunden sein, dass das Flurförderzeug bei Verdrehen des Schalters 32 zur Fahrzeugvorderseite hin mit einer Vorwärtsfahrt beginnt, während das Flurförderzeug bei Verdrehung des Schalters 32 in entgegengesetzter Richtung mit einer Rückwärtsfahrt beginnt. Der Schalter 32 ist weiterhin durch Federvorspannung in seine in Fig. 1 dargestellte Neutralstellung vorgespannt. Der Auslenkungsweg des Schalters 32 aus dieser Neutralstellung ist proportional zu der Geschwindigkeit, mit welcher das Flurförderzeug in der gewählten Richtung angetrieben wird.

In Vorwärtsfahrtrichtung VF vom Griffteil 28 versetzt ist ein zweiter Schalter 34 vorgesehen, welcher um eine zweite Schalterdrehachse 36 drehbar gelagert ist. Auch der zweite Schalter 34 ist durch Federvorspannung in eine Neutralstellung vorgespannt, aus der er in zwei entgegengesetzten Drehrichtungen ausgelenkt werden kann.

In dem in Fig. 1 dargestellten Beispiel dient der zweite Schalter 34 zur Betätigung eines Hubantriebs für ein Lastaufnahmemittel, so dass das Lastaufnahmemittel bei Drehung des zweiten Schalters 34 um die zweite Schalterdrehachse 36 in einer ersten Drehrichtung angehoben und bei Drehung um eine zur ersten entgegengesetzte zweite Drehrichtung abgesenkt wird.

Der zweite Schalter 34 ist dabei derart angeordnet, dass er von einem Zeigefinger der den Griffabschnitt 28c greifenden Hand des Flurförderzeugfahrers erreichbar und betätigbar ist, ohne dass die Hand ihre Lage am Griffabschnitt 28c verändern müsste. Es ist insbesondere kein Verrutschen der Hand längs des Griffabschnitts 28c notwendig. Somit kann sich der Flurförderzeugfahrer während des gesamten Betriebs des Flurförderzeugs, d. h. während eines Verfahrens desselben und während einer Verlagerung einer aufgenommenen Last, am Griffteil 28 sicher festhalten. Dies erhöht die Sicherheits des Flurförderzeugfahrers erheblich.

Der zweite Drehschalter 34 weist eine für die in Fig. 1 gezeigte Anwendung besonders vorteilhafte Gestaltung auf: Der Schalter 34 ist als Doppelhebelschalter ausgeführt mit einem bezüglich einer Blickrichtung auf die Fig. 1 vor der zweiten Schalterdrehachse 36 liegendem ersten Hebelarm 34a und einem in Bezug auf eine Blickrichtung auf die Fig. 1 hinter der zweiten Schalterdrehachse 36 liegenden zweiten Hebelarm 34b.

Der bei Betrachtung von einer Aufstandsfläche des Flurförderzeugs aus oberhalb der zweiten Schalterdrehachse 36 liegende erste Hebelarm 34a liegt dem Griffabschnitt 28c des Griffteils 28 näher als der von einer Aufstandsfläche des Flurförderzeugs aus gesehen untere zweite Hebelarm 34b. Um das Erreichen des zweiten Hebelarms 34b durch vorzugsweise den Zeigefinger einer den Griffabschnitt 28c des Griffteils 28 umgreifenden Hand zu erleichtern, ragt dieser in axialer Richtung, d. h. in Richtung der zweiten Schalterdrehachse 36, über den ersten Hebelarm 34a vor.

Die oben beschriebene Ausbildung des zweiten Schalters 35 hat folgenden Vorteil: Ein von einer den Griffabschnitt 28c umgreifenden Hand abgespreizter Finger kann eine größere Druckkraft als Schubkraft aufbringen. Mit Druckkraft ist dabei eine Kraft gemeint, welche von dem Finger über die das Fingerabdruckmuster tragende Fingerkuppen-Innenseite an einen an dieser Seite anliegenden Gegenstand übertragbar ist. Dagegen ist mit Schubkraft eine Kraft gemeint, welche von einer den Fingernagel aufweisenden Seite an einen an dieser Seite anliegenden Gegenstand übertragbar ist. Durch die Ausbildung des zweiten Schalters 34 ist dieser jeweils durch Druckkraft eines Fingers in zwei entgegengesetzte Drehrichtungen um die zweite Schalterdrehachse 36 drehbar, was die Betätigung des Schalters 34 erheblich erleichtert. Durch das Vorragen des zweiten Hebelarms 34b in axialer Richtung über den ersten Hebelarm 34a hinaus ist dieser bequem vom abgespreizten Finger der den Griffabschnitt 28c umgreifenden Hand erreichbar, ohne dass der erste Hebelarm 34a dabei stört.

Es ist anzumerken, dass zumindest der von einem Finger erreichbare Bereich des zweiten Schalters 34, vorzugsweise der gesamte Schalter 34, keine scharfen Kanten, sondern Rundungen mit verhältnismäßig großem Radius aufweist, um jegliches Verletzungsrisiko bei einer Betätigung der beiden Hebelabschnitte 34a und 34b in unterschiedlicher Aufeinanderfolge auszuschließen.

In Fig. 1 nicht zu erkennen ist, dass der Schalter 34 näher an der Aufstandsfläche des Flurförderzeugs liegt als der Griffteilabschnitt 28c. Dies liegt darin begründet, dass ein Zeigefinger einer den Griffabschnitt 28c möglichst bequem greifenden Hand im abgestreckten Zustand nach vorne und nach unten sowie ggf. auch leicht in Fahrzeugquerrichtung nach außen weist.

Es sei ausdrücklich darauf hingewiesen, dass bei biometrischen Angaben, wie etwa "bei einem von einer Hand gegriffenem Griffabschnitt von einem Finger dieser Hand erreichbar und betätigbar" die Körpermaße einer, vorzugsweise männlichen, erwachsenen Durchschnittsperson zugrunde gelegt werden sollen. Die Verwendung von Durchschnittskörpermaßen ist bei der Gestaltung von Bedienfeldern oder allgemein Arbeitsplätzen Gang und Gäbe.

Im gezeigten Beispiel schließt die zweite Schalterdrehachse 36 mit einer sowohl zur Längsmittelebene LME als auch zur Aufstandsfläche orthogonalen Fahrzeugquerebene FQE bezüglich einer zur Aufstandsebene orthogonalen Kippachse 38 einen Winkel β ein, welcher im vorliegenden Beispiel 23° beträgt.

Ebenso hat sich gezeigt, dass der zweite Schalter 34 vom Griffteil 28 aus mit dem Zeigefinger einer den Griffabschnitt 28c umgreifenden Hand dann besonders einfach erreichbar und betätigbar ist, wenn die zweite Schalterdrehachse 36 mit der ersten Schalterdrehachse 30 bei Betrachtung orthogonal zur Aufstandsfläche des Flurförderzeugs einen Winkel γ von 5° einschließt.

In der Nähe des Griffteils 28 ist weiterhin ein Notausschalter 40 angeordnet, um das Flurförderzeug erforderlichenfalls mit einem einzigen Betätigungsvorgang vollständig still zu legen. In der Nähe des zweiten Schalters 34, vorzugsweise in Richtung der zweiten Schalterdrehachse 36 zur Längsmittelebene LME hin versetzt ist ein weiterer Schalter 42 vorgesehen, welcher ebenfalls noch von dem Zeigefinger einer den Griffabschnitt 28c umgreifenden Hand erreichbar ist. Durch den Druckknopfschalter 42 kann beispielsweise während der Niederdrückdauer eine Hupe ertönen, oder der Schalter 42 kann zum Ein- und Ausschalten einer Fahrzeugbeleuchtung verwendet werden.

Wie durch eine den zweiten Schalter 34 viertelkreisartig umgebende Strichlinierung angedeutet ist, ist der zweite Schalter 34 in einer Mulde 44 des Bedienpults 10 angeordnet. Es versteht sich von selbst, dass der zweite Schalter 34 auch betätigt und gegriffen werden kann, ohne gleichzeitig den Griffabschnitt 28c zu greifen.

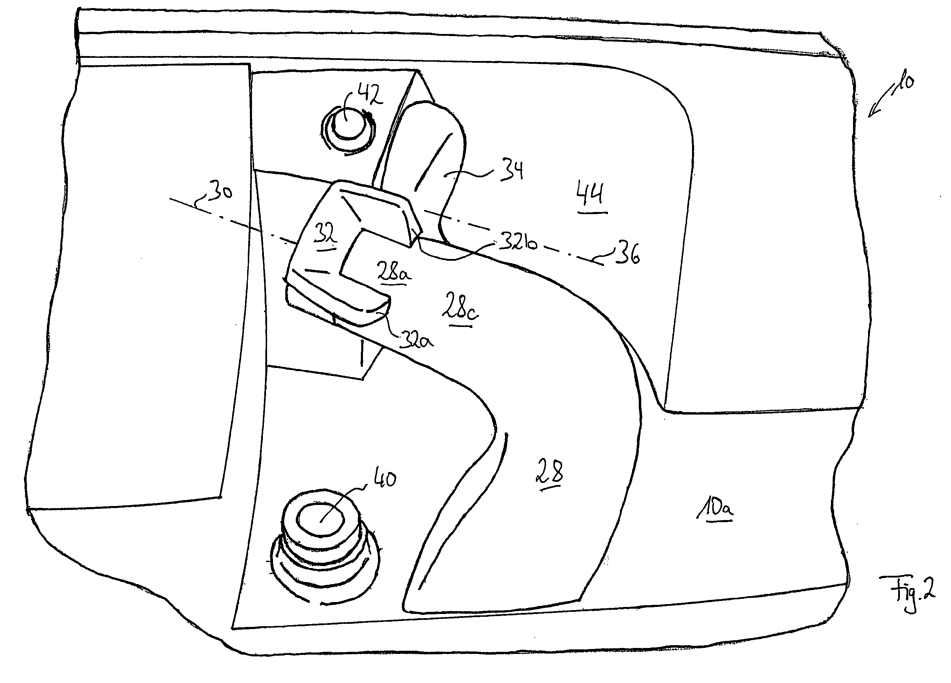

In Fig. 2 sind der Bedienpultbereich, welcher das Griffteil 28 und den zweiten Schalter 34 umfasst, in perspektivischer Darstellung bei Betrachtung durch einen hinter dem Griffteil stehenden Fahrer mit Blickrichtung in Vorwärtsfahrtrichtung sowie zur Aufstandsfläche hin dargestellt.

Die Daumenangriffsvorsprünge 32a und 32b des Schalters 32 von Fig. 2 ragen im Gegensatz zur Darstellung von Fig. 1 in den Griffabschnitt 28c hinein, um leichter von einem Daumen einer den Griffabschnitt 28c greifenden Hand erreicht werden zu können.

## Patentansprüche

1. Flurförderzeug mit einem um eine Lenkrad-Drehachse (18) drehbaren Lenkrad (14), wobei die Lenkrad-Drehachse (18) bezüglich einer zu einer Aufstandsfläche des Flurförderzeugs orthogonalen, einen Fahrerplatz (12) durchsetzenden und in Längsrichtung des Flurförderzeugs verlaufenden gedachten Ebene (LME) um eine zur Aufstandsfläche im Wesentlichen orthogonale in der gedachten Ebene liegenden Verdrehungsachse (20) einen vorbestimmten Verdrehwinkel (α) verdreht ist,
**dadurch gekennzeichnet, dass** die Lenkrad-Drehachse (18) vom Fahrer weg verdreht ist, wobei die Verdrehungsachse (20) vom Fahrerplatz (12) aus betrachtet in Vorwärtsfahrtrichtung (VF) des Flurförderzeugs gelegen ist.

2. Flurförderzeug nach Anspruch 1,
**dadurch gekennzeichnet, dass** die gedachte Ebene (LME) eine Längsmittelebene (LME) des Flurförderzeugs ist.

3. Flurförderzeug nach Anspruch 1 oder 2,
**dadurch gekennzeichnet, dass** die Lenkrad-Drehachse (18) im Wesentlichen parallel zur Aufstandsfläche des Flurförderzeugs liegt.

4. Flurförderzeug nach einem der vorhergehenden Ansprüche,
**dadurch gekennzeichnet, dass** der Verdrehwinkel (α) zwischen der Lenkrad-Drehachse und der gedachten Ebene (LME) 5° bis 15°, vorzugsweise etwa 10° beträgt.

5. Flurförderzeug mit einem Griffteil (28), an welchem ein erster beweglicher Schalter (32) zur Steuerung einer steuerbaren ersten Komponente des Flurförderzeugs derart vorgesehen ist, dass er dann, wenn ein Griffabschnitt (28c) des Griffteils (28) mit einer Hand umgriffen ist, von einem ersten Finger der das Griffteil (28) greifenden Hand erreichbar und betätigbar ist, gegebenenfalls nach einem der vorhergehenden Ansprüche,
**dadurch gekennzeichnet, dass** ein vom ersten gesonderter zweiter beweglicher Schalter (34) am Flurförderzeug zur Steuerung einer steuerbaren von der ersten verschiedenen zweiten Komponente des Flurförderzeugs derart vorgesehen ist, dass er dann, wenn der Griffabschnitt (28c) des Griffteils (28) mit der Hand umgriffen ist, von einem vom ersten Finger verschiedenen zweiten Finger der das Griffteil (28) greifenden Hand erreichbar und betätigbar ist.

6. Flurförderzeug nach Anspruch 5,
**dadurch gekennzeichnet, dass** der erste (2) und der zweite Schalter (34) Drehschalter (32, 34) sind, welche durch Drehung um jeweilige Drehschalterachsen (30, 36) betätigbar sind.

7. Flurförderzeug nach Anspruch 6,
**dadurch gekennzeichnet, dass** der Griffabschnitt (28c) zumindest abschnittsweise zu einer Griffabschnitt-Mittelachse symmetrisch ist, wobei die Drehschalterachse (30) des ersten Drehschalters (32) im Wesentlichen koaxial zur Griffabschnitt-Mittelachse verläuft.

8. Flurförderzeug nach Anspruch 6 oder 7,
**dadurch gekennzeichnet, dass** die Drehschalterachse (36) des zweiten Drehschalters (34) bezüglich der Drehschalterachse (30) des ersten Drehschalters (32) um eine zur Aufstandsfläche des Flurförderzeugs im Wesentlichen orthogonale Kippachse einen Winkel (γ) von -5° bis +10°, vorzugsweise 0° bis +7,5°, besonders bevorzugt ca. 5° verkippt ist, wobei die Drehschalterachse (30) des ersten Drehschalters (32) als Bezugsachse dient, von welcher aus positive Winkel im Gegenuhrzeigersinn gemessen werden.

9. Flurförderzeug nach einem der Ansprüche 5 bis 8,
**dadurch gekennzeichnet, dass** die Drehschalterachse (36) des zweiten Drehschalters (34) mit einer Bezugsebene (FQE), welche sowohl zur Längsrichtung des Flurförderzeugs als auch zu dessen Aufstandsfläche orthogonal ist und welche den Schnittpunkt der Drehschalterachse (36) des zweiten Drehschalters (34) mit der Längsmittelebene (LME) des Flurförderzeugs enthält, einen Winkel (β) von ca. 15° bis 30°, vorzugsweise von 20° bis 25°, besonders bevorzugt von ca. 23°, einschließt, wobei positive Winkel von der Bezugsebene aus im Uhrzeigersinn gemessen sein sollen.

10. Flurförderzeug nach einem der Ansprüche 5 bis 9,
**dadurch gekennzeichnet, dass** der zweite Schalter (34), von der Aufstandsfläche des Flurförderzeugs aus betrachtet, niedriger angeordnet ist als der erste Schalter (32).

11. Flurförderzeug nach einem der Ansprüche 5 bis 10,
**dadurch gekennzeichnet, dass** der erste Schalter (32), vom Fahrerplatz (12) des Flurförderzeugs aus betrachtet, in Längsrichtung des Flurförderzeugs vor dem zweiten Schalter (34) angeordnet ist.

12. Flurförderzeug nach einem der vorhergehenden Ansprüche,
**dadurch gekennzeichnet, dass** es ein Bedienpult (10) mit einem Lenkrad (14) nach einem der Ansprüche 1 bis 4 oder/und mit einem ersten (32) und einem zweiten Schalter (34) nach einem der Ansprüche 5 bis 11 umfasst.
